# EUROPÄISCHE PATENTANMELDUNG

(11) **EP 3 632 639 A1**
(43) Veröffentlichungstag der Anmeldung: **08.04.2020**
(21) Anmeldenummer: 18197912.1
(22) Anmeldetag: 01.10.2018
(51) Int. Cl.: B28D 7/02, B23Q 11/00, E21B 21/015

(54) **ABSAUGVORRICHTUNG FÜR EINE KERNBOHREINRICHTUNG**

(71) Anmelder: Hilti Aktiengesellschaft, 9494 Schaan (LI)
(72) Erfinder: Holzmeier, Georg, 86748 Marktoffingen (DE)
(74) Vertreter: Hilti Aktiengesellschaft Corporate Intellectual Property

(57) **Zusammenfassung**

Es wird eine Absaugvorrichtung (1) für eine Kernbohreinrichtung mit einem wenigstens einen Hohlraum (7) aufweisenden Gehäuse (4) beschreiben, das einen Deckel (2) und eine umlaufend mit dem Deckel (2) verbundene Wandung (3) aufweist. Es ist ein mit dem Gehäuse (4) verbundener Absaugstutzen (5) vorgesehen, der zur Anbindung der Absaugvorrichtung (1) an eine Saugeinrichtung ausgeführt ist. Die Wandung (3) weist wenigstens eine Einlassöffnung (44, 45) auf, über die der Hohlraum (7) mit der Umgebung (U) verbunden ist. Auf einer dem Hohlraum (7) abgewandten Seite der Wandung (3) ist eine Dichteinrichtung (50, 51) mit dem Gehäuse (4) verbunden, die zwischen einer im Wesentlichen an der Wandung (3) des Gehäuses (4) anliegenden Nichtgebrauchsstellung und einer gegenüber der Nichtgebrauchsstellung um eine Drehachse (57, 58) verschwenkten Gebrauchsstellung verlagerbar ist.

## Beschreibung

Die vorliegende Erfindung betrifft eine Absaugvorrichtung für eine Kernbohreinrichtung gemäß dem Gegenstand des Oberbegriffs des Patentanspruches 1.

Aus der Praxis sind Absaugvorrichtungen bekannt, die eine Kernbohreinrichtung während eines Bearbeitungsvorgangs umfangsseitig einfassen, so dass bei der Durchführung eines Kernbohrvorgangs auftretendes Bohrwasser über die Absaugvorrichtung abführbar ist und eine Verschmutzung der Umgebung verhindert ist.

Da eine derartige Absaugvorrichtung jeweils einen größeren Umfang als der Durchmesser des Kernbohrwerkzeugs aufweist, ist eine Herstellung von Kernbohrungen beispielsweise im Bereich von Raumecken hierdurch begrenzt und es ist ein durch die Absaugvorrichtung vorgegebener Mindestabstand von derartigen Hindernissen erforderlich.

Es ist Aufgabe der vorliegenden Erfindung, eine Absaugvorrichtung bereitzustellen, bei der eine große Freiheit in der Positionierung einer Kernbohrung vorliegt, wobei mit der Absaugvorrichtung bei verschiedenen räumlichen Rahmenbedingungen möglichst viel Bohrwasser einer Kernbohrung sicher abführbar ist.

Die Aufgabe wird mit einer Absaugvorrichtung für eine Kernbohreinrichtung gemäß des Patentanspruches 1 gelöst.

Es ist somit eine Absaugvorrichtung für eine Kernbohreinrichtung mit einem wenigstens einen Hohlraum aufweisenden Gehäuse vorgesehen, das einen Deckel und eine umlaufend mit dem Deckel verbundene Wandung aufweist, wobei ein mit dem Gehäuse verbundener Absaugstutzen vorgesehen ist, der zur Anbindung der Absaugvorrichtung an eine Saugeinrichtung bzw. einen Entstauber ausgeführt ist. Es wird vorgeschlagen, dass die Wandung wenigstens eine Einlassöffnung aufweist, über die der Hohlraum mit der Umgebung verbunden ist, wobei auf einer dem Hohlraum abgewandten Seite der Wandung eine Dichteinrichtung mit dem Gehäuse verbunden ist, die zwischen einer im Wesentlichen an der Wandung des Gehäuses anliegenden Nichtgebrauchsstellung und einer gegenüber der Nichtgebrauchsstellung um eine Drehachse verschwenkten Gebrauchsstellung verlagerbar ist.

Die Absaugvorrichtung ist dazu ausgeführt, komplett radial außerhalb der Kernbohreinrichtung angeordnet zu werden, so dass eine große Freiheit in der Positionierung einer Kernbohrung vorliegt und eine Erzeugung von Kernbohrungen auch in randnahen Bereich, beispielsweise im Bereich von Raumecken, oder nahe an Hindernissen durchführbar ist. Eine Positionierung der Kernbohreinrichtung ist somit durch die Absaugvorrichtung nicht einschränkt. Im Betriebszustand der Absaugvorrichtung, in dem die Absaugvorrichtung an eine Saugeinrichtung bzw. einen Entstauber gekoppelt ist, wird die Absaugvorrichtung durch den durch die Saugeinrichtung in dem Hohlraum erzeugten Unterdruck insbesondere in einem Nahbereich der zu erzeugenden Kernbohrung an der Wand oder auf dem Boden angesaugt und hält vorzugsweise ohne Aufbringung einer weiteren Kraft. Um dies auf einfache Weise zu erreichen, liegt eine dem Deckel abweisende Seite der Wandung vorzugsweise komplett umlaufend im Wesentlichen in einer Ebene.

Das bei der Kernbohrung auftretende Bohrwasser wird durch die wenigstens eine Einlassöffnung in den Hohlraum der Absaugvorrichtung eingeführt und durch die Saugeinrichtung aus diesem über den Absaugstutzen abgeführt. Durch das Vorsehen der wenigstens einen, insbesondere als Dichtplatte oder Dichtstreifen ausgeführten Dichteinrichtung ist auf konstruktiv einfache Weise ein Einfangbereich für das Bohrwasser vergrößerbar, so dass ein großer Anteil des Bohrwassers dem Hohlraum der Absaugvorrichtung durch die wenigstens eine Einlassöffnung zuführbar ist.

Dadurch, dass die Dichteinrichtung zwischen einer im Wesentlichen an der Wandung des Gehäuses anliegenden Nichtgebrauchsstellung und einer gegenüber der Nichtgebrauchsstellung um eine Drehachse verschwenkten Gebrauchsstellung verlagerbar ist, kann die Dichteinrichtung je nach Positionierung gegenüber einer Kernbohreinrichtung und in Abhängigkeit der Größe des verwendeten Kernbohrdurchmessers jeweils auf einfache Weise derart eingestellt werden, dass in dem jeweiligen Anwendungsfall eine größtmöglicher Teil des Bohrwassers eingefangen und der wenigstens einen Einlassöffnung zugeführt wird. Mit der vorgeschlagenen Absaugvorrichtung ist somit bei verschiedenen räumlichen Rahmenbedingungen möglichst viel Bohrwasser einer Kernbohrung sicher abführbar. Mittels der Dichteinrichtung ist beispielsweise eine zum Einfangen von Bohrwasser wirksame Breite der Absaugvorrichtung gegenüber einer Ausführung ohne Dichteinrichtung oder mit der Dichteinrichtung in der Nichtgebrauchsstellung vergrößerbar. Wird eine Kernbohrung beispielsweise im Bereich einer Wand vorgenommen, ist mittels der Dichteinrichtung beispielsweise eine Abdichtung gegenüber einer seitlichen Wand möglich und es kann verhindert werden, dass Bohrwasser an der seitlichen Wand herabläuft und von der Absaugvorrichtung nicht erfasst wird.

Die Dichteinrichtung weist vorzugsweise einen im Wesentlichen rechteckigen Querschnitt auf, wobei insbesondere eine Längserstreckung der Dichteinrichtung je nach Anwendungsfall variieren kann.

Die Dichteinrichtung ist vorzugsweise zwischen der Nichtgebrauchsstellung und der Gebrauchsstellung um einen Winkel von etwa 180° verschwenkbar. Hierdurch ist die Absaugvorrichtung auf einfache Weise bei Kernbohreinrichtungen mit verschiedenen Kernbohrdurchmessern und bei verschiedenen räumlichen Rahmenbedingungen einsetzbar.

Um auf einfache Weise zu verhindern, dass zwischen der Dichteinrichtung und der Wand oder dem Boden, an dem die Absaugvorrichtung im Betriebszustand angeordnet ist, Bohrwasser durchtritt, ist die Dichteinrichtung vorzugsweise mit einem flexiblen und/oder elastischen Material beispielsweise Gummi, insbesondere Nitrilkautschuk oder Ethylen-Propylen-Dien-Kautschuk, vorzugsweise mit einer Shore-Härte von größer 70, ausgeführt. Es kann weiterhin vorgesehen sein, dass die Dichteinrichtung ein Kunststoffteil aufweist, welches insbesondere von einer Weichkomponente vorzugsweise aus Gummi umgeben bzw. umspritzt ist.

Die Dichteinrichtung kann sowohl fest, d. h. unlösbar als auch lösbar mit dem Gehäuse verbunden sein, wobei die lösbare Anordnung den Vorteil hat, dass die Dichteinrichtung auf einfache Weise austauschbar oder durch eine mit anderen geometrischen Maßen ausgeführte Dichteinrichtung ersetzbar ist.

Zur einfachen Anbindung der Dichteinrichtung kann es vorgesehen sein, dass das Gehäuse eine zylinderförmige Aufnahme und die Dichteinrichtung eine hierzu korrespondierend ausgeführte zylinderförmige Ausnehmung aufweist, wobei ein Innendurchmesser der Ausnehmung vorzugsweise kleiner als ein Außendurchmesser der Aufnahme ist. Durch das Vorsehen einer Untermaßverbindung ist auf einfache Weise ein sicherer Halt der Dichteinrichtung in der jeweils gewählten Gebrauchsposition beispielsweise durch eine in dem Gummi vorliegende Spannung sicherstellbar. Die zylinderförmige Aufnahme ist vorzugsweise in einem seitlichen Randbereich des Gehäuses angeordnet, so dass mit der Dichteinrichtung auf einfache Weise ein Einfangbereich von Bohrwasser vergrößerbar ist.

Wenn eine Seite der Dichteinrichtung, die in der Betriebsstellung der Absaugvorrichtung einer Wand oder einem Boden zugewandt ist, ausgehend von der Aufnahme einen schrägen Verlauf aufweist, kann auf konstruktiv einfache Weise eine gewünscht große Flächenpressung der Dichteinrichtung gegenüber dem Untergrund, d. h. dem Boden oder der Wand, so dass eine gute Abdichtung gegenüber dem Untergrund erzielbar ist. Hierdurch ist ein vorteilhaft großer Anteil des Bohrwassers einfangbar.

Um einen möglichst großen Einfangbereich für das Bohrwasser bereitzustellen, kann die Dichteinrichtung in einem bezüglich einer Quererstreckung der Absaugvorrichtung seitlichen Randbereich der Absaugvorrichtung an das Gehäuse angebunden ist.

Vorzugsweise sind zwei Dichteinrichtungen vorgesehen, die in einander abgewandten seitlichen Randbereichen der Absaugvorrichtung an das Gehäuse angebunden sind. Auf diese Weise ist durch die Dichteinrichtungen ein Einfangbereich von Bohrwasser besonders genau einstellbar und eine große Einfangbreite der Absaugvorrichtung erzielbar.

Bei einer vorteilhaften Ausführung ist es vorgesehen, dass die Wandung einen ersten im Wesentlichen plan ausgeführten Wandungsbereich und einen zweiten im Wesentlichen plan ausgeführten Wandungsbereich aufweist, wobei eine dem Hohlraum abgewandte Oberfläche des ersten Wandungsbereichs mit einer dem Hohlraum abgewandten Oberfläche des zweiten Wandungsbereichs einen stumpfen Winkel einschließt. Das bei der Kernbohrung auftretende Bohrwasser wird durch die wenigstens eine Einlassöffnung in den Hohlraum der Absaugvorrichtung eingeführt und durch die Saugeinrichtung aus diesem über den Absaugstutzen abgeführt. Durch das Vorsehen des stumpfen Winkels, der beispielsweise zwischen 120° und 160° liegt und insbesondere etwa 140° beträgt, ist es möglich die Absaugvorrichtung sehr nahe an der zu erzeugenden Kernbohrung anzuordnen und die Bohrkrone zumindest teilweise einzufassen. Auf diese Weise ist es möglich einen großen Anteil des bei der Herstellung der Kernbohrung auftretenden Bohrwassers abzusaugen. Die Absaugvorrichtung wird bei einer Benutzung an der Wand insbesondere derart positioniert, dass der erste Wandungsbereich und der zweite Wandungsbereich ausgehend von einem einander zugewandten Bereich jeweils in einer diesbezüglich abgewandten Richtung gegenüber einer Horizontalen nach oben verlaufen, so dass sich das Bohrwasser durch die Schwerkraft in einem einander zugewandten Bereich des ersten Wandungsbereichs und des zweiten Wandungsbereichs sammelt.

Es hat sich als vorteilhaft herausgestellt, wenn der erste Wandungsbereich und der zweite Wandungsbereich mittels eines vorzugsweise plan ausgeführten dritten Wandungsbereich miteinander verbunden sind.

Die Absaugvorrichtung weist eine zur Abführung einer großen Menge von Bohrwasser aus dem Hohlraum günstige Form auf, wenn die Wandung einen vierten, insbesondere sichelförmig oder U-förmig ausgeführten Wandungsbereich aufweist, der mit dem ersten Wandungsbereich und mit dem zweiten Wandungsbereich verbunden ist.

Um eine günstige Absaugung des in den Hohlraum eingeführten Bohrwassers zu erzielen, kann in dem Hohlraum ein insbesondere zylinderförmig ausgeführter Absaugbereich angeordnet sein, durch den der Absaugstutzten mit dem Hohlraum in Verbindung steht. Der Absaugbereich ist insbesondere mittig in dem vorzugsweise spiegelsymmetrisch zu dem Absaugbereich ausgeführten Gehäuse angeordnet. Der Absaugbereich weist vorzugsweise eine Wandung auf, die sich von dem Deckel bis in eine Ebene erstreckt, die im Betrieb der Ansaugvorrichtung an der Wand oder dem Boden anliegt.

Um eine möglichst komplette Absaugung von Bohrwasser aus dem Hohlraum für den Fall zu erzielen, dass das Bohrwasser im Betrieb nicht durch die Schwerkraft in einen Nahbereich des Absaugbereichs geführt wird, kann wenigstens ein Absaugkanal vorgesehen sein, der durch den vierten Wandungsbereich und eine im Wesentlichen parallel zu dem vierten Wandungsbereich angeordneten fünften Wandungsbereich gebildet ist, wobei sich der fünfte Wandungsbereich von dem Absaugbereich insbesondere bis zu einem dem Absaugbereich abgewandten seitlichen Randbereich der Wandung erstreckt. Der fünfte Wandungsbereich ist vorzugsweise mit dem Deckel verbunden und erstreckt sich insbesondere bis zu einer Ebene, die im Betrieb der Ansaugvorrichtung an der Wand oder dem Boden anliegt. Hierdurch wird durch den fünften Wandungsbereich und den vierten Wandungsbereich der Absaugkanal gebildet, mittels dem Bohrwasser aus einem dem Absaugbereich entfernten Bereich durch die erzielten Strömungseffekte sicher in Richtung des Absaugbereichs gefördert wird. Um eine günstige Absaugung von Bohrwasser aus dem Hohlraum erzielen zu können, ist der Absaugkanal vorzugsweise direkt mit dem Absaugbereich verbunden.

Eine Absaugung von Bohrwasser aus dem Hohlraum ist besonders gut, wenn im Betrieb möglichst wenige und kleine Fehlluftströme vorliegen. Dies ist durch eine möglichst geschlossene Kontur einer Wand des Absaugbereichs erzielbar, die im Betrieb der Absaugvorrichtung insbesondere auf dem Untergrund aufliegt.

Um eine zu einer guten Absaugung von Bohrwasser aus dem Hohlraum erforderliche Luftströmung mit einer gewünscht hohen Geschwindigkeit zu erzielen, kann der Absaugkanal wenigstens ein den Strömungsquerschnitt des Absaugkanals verjüngendes Element aufweisen.

Es hat sich gezeigt, dass eine gewünscht gute Abführung von Bohrwasser aus dem Hohlraum erzielt wird, wenn der Absaugkanal einen möglichst kleinen minimalen Querschnitt aufweist, da hierdurch bei Anschluss einer Saugeinrichtung an den Absaugstutzen in dem Absaugkanal eine Luftströmung mit hoher Geschwindigkeit erzielbar ist. Durch diese Luftströmung mit hoher Geschwindigkeit wird in dem Hohlraum vorliegendes Bohrwasser aufgrund des Venturieffekts mitgeführt und kann bei entsprechender Gestaltung auch entgegen der Schwerkraft mitgeführt werden. Der minimale Querschnitt des Absaugkanals liegt beispielsweise zwischen 30 mm² und 45 mm², vorzugsweise bei etwa 37,5 mm².

Vorzugsweise weist das Gehäuse drei Einlassöffnungen auf, über die dem Hohlraum von der Umgebung Bohrwasser zuführbar ist, wobei eine Einlassöffnung in einem Verbindungsbereich des ersten Wandungsbereichs mit dem vierten Wandungsbereich, eine Einlassöffnung in einem Verbindungsbereich des zweiten Wandungsbereichs mit dem vierten Wandungsbereich und eine Einlassöffnung in der Wandung im Bereich des Absaugbereichs angeordnet ist.

Um auf konstruktiv einfache Weise eine vorteilhafte Ansaugung der Ansaugvorrichtung an einer Wand oder dem Boden zu erzielen, kann bzw. können ein Dichtelement oder mehrere Dichtelemente vorgesehen sein, das oder die auf einer dem Deckel abgewandten Seite insbesondere umlaufend mit der Wandung verbunden ist. Das Dichtelement bzw. die Dichtelement sind vorzugsweise derart ausgeführt, dass sie in einem an einer Wand oder einem Boden angesaugten Position der Ansaugvorrichtung den Absaugkanal gegenüber der Wand oder dem Boden abdichten.

Um eine günstige Handhabung der Absaugvorrichtung zu erzielen, kann das Gehäuse eine Verbindungseinrichtung zur Anbindung einer Halteeinrichtung für die Absaugvorrichtung aufweisen. Mittels der Halteeinrichtung, beispielsweise eines Stiels, kann die Absaugvorrichtung beispielsweise zur Aufnahme von Bohrwasser händisch bewegt werden.

Weitere Vorteile ergeben sich aus der folgenden Figurenbeschreibung. In den Figuren ist ein Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: eine dreidimensionale Ansicht einer Absaugvorrichtung, wobei zum Zusammenwirken mit einem Untergrund vorgesehen Dichtelemente ausschnittsweise ersichtlich sind;
- Fig. 2: eine Draufsicht auf die Absaugvorrichtung gemäß Fig. 1, wobei Dichteinrichtungen in einer gegenüber einer Nichtgebrauchsstellung teilweise verschwenkten Gebrauchsstellung angeordnet sind;
- Fig. 3: eine Draufsicht auf die Absaugvorrichtung gemäß Fig. 1, wobei Dichteinrichtungen in einer gegenüber der Nichtgebrauchsstellung vollständig verschwenkten Gebrauchsstellung angeordnet sind;
- Fig. 4: eine dreidimensionale Ansicht der Absaugvorrichtung gemäß Fig. 1 von unten, wobei die Dichteinrichtungen in der Nichtgebrauchsstellung angeordnet sind;
- Fig. 5: eine Fig. 4 entsprechende Ansicht der Absaugvorrichtung gemäß Fig. 1, wobei die Dichteinrichtungen in einer teilweise verschwenkten Gebrauchsstellung angeordnet sind;
- Fig. 6: eine Fig. 4 entsprechende Ansicht der Absaugvorrichtung gemäß Fig. 1, wobei die Dichteinrichtungen in der vollständig verschwenkten Gebrauchsstellung angeordnet sind;
- Fig. 7: eine Ansicht der Absaugvorrichtung gemäß Fig. 1 von unten mit in der Nichtgebrauchsstellung angeordneten Dichteinrichtungen;
- Fig. 8: eine Fig. 7 entsprechende Ansicht der Absaugvorrichtung gemäß Fig. 1, wobei die Dichtelemente nicht gezeigt sind;
- Fig. 9: eine dreidimensionale Ansicht der Absaugvorrichtung gemäß Fig. 1 von unten, wobei die Dichtelemente nicht gezeigt sind;
- Fig. 10: eine Schnittansicht der Absaugvorrichtung gemäß Fig. 1 mit den Dichtelementen, wobei ein Absaugkanal näher ersichtlich ist;
- Fig. 11: eine dreidimensionale Ansicht eines Ausschnitts der Absaugvorrichtung gemäß Fig. 1 ohne die Dichtelemente, wobei eine in einer Wandung eines Gehäuses angeordnete Eintrittsöffnung näher ersichtlich ist;
- Fig. 12: eine Fig. 11 entsprechende Ansicht der Absaugvorrichtung gemäß Fig. 1 mit den Dichtelementen;
- Fig. 13: eine dreidimensionale Ansicht eines Ausschnitts der Absaugvorrichtung gemäß Fig. 1 ohne die Dichtelemente, wobei eine weitere in der Wandung des Gehäuses angeordnete Eintrittsöffnung näher ersichtlich ist; und
- Fig. 14: eine Fig. 13 entsprechende Ansicht der Absaugvorrichtung gemäß Fig. 1 mit den Dichtelementen.

### Ausführungsbeispiel:

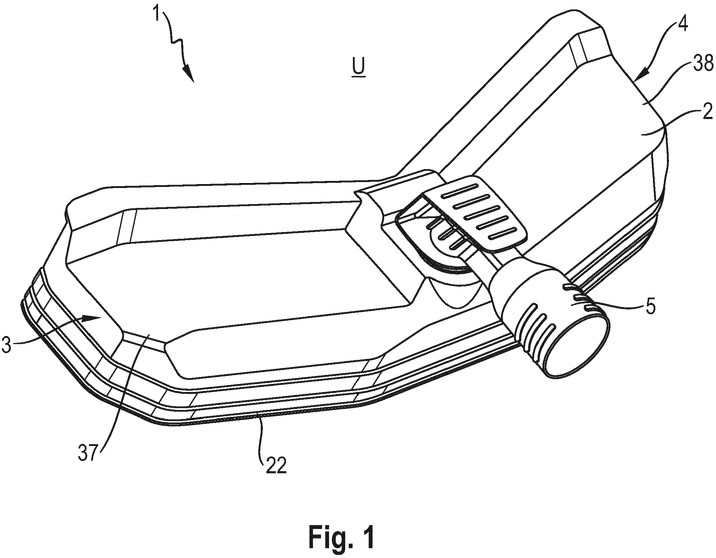

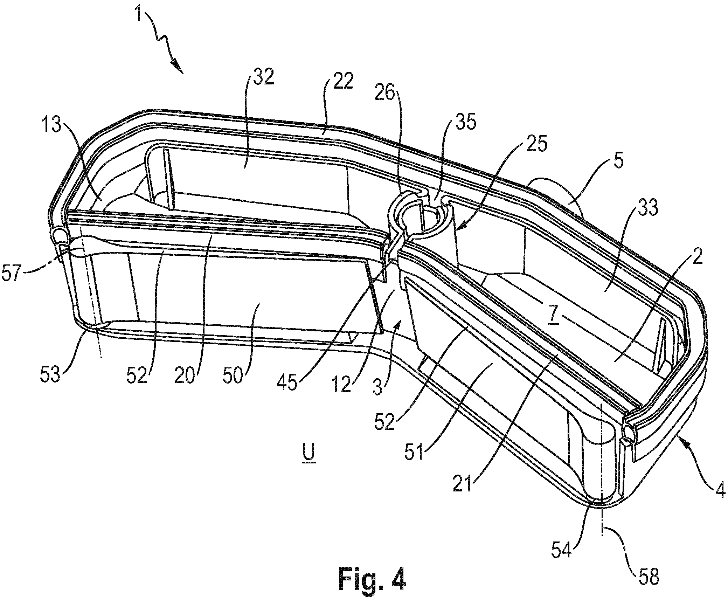

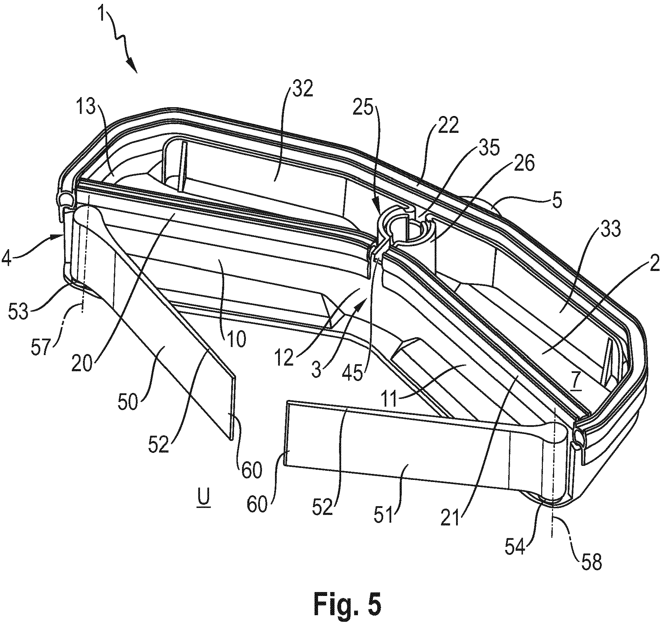

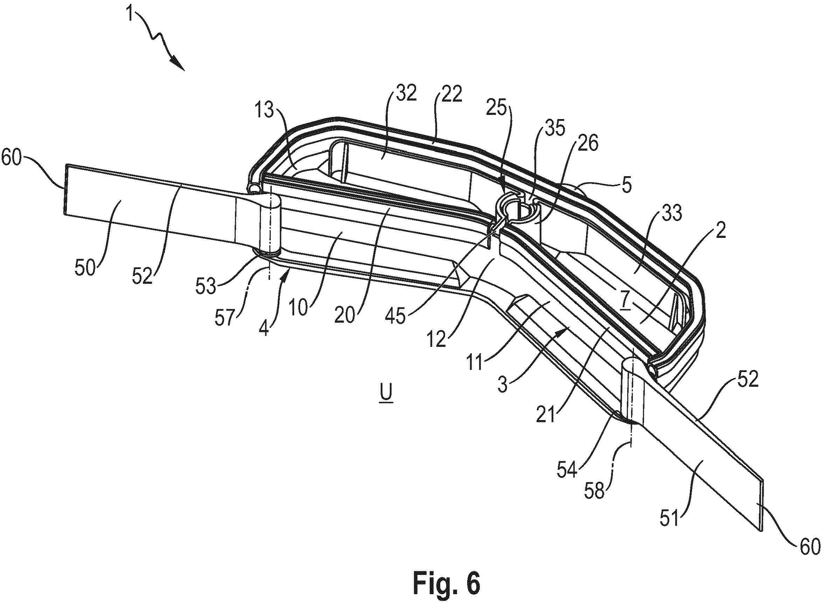

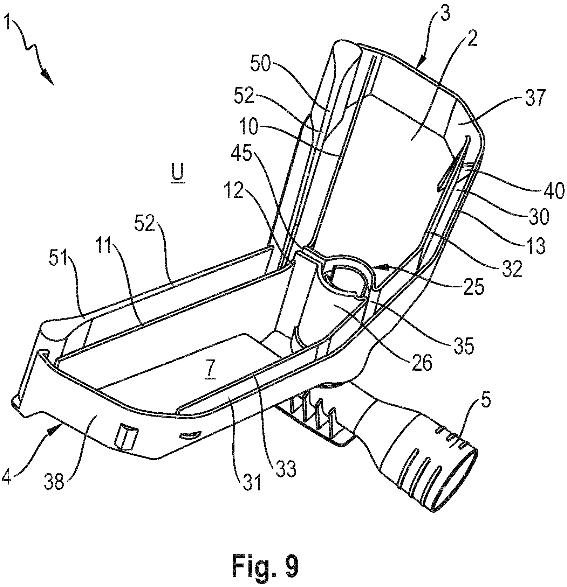

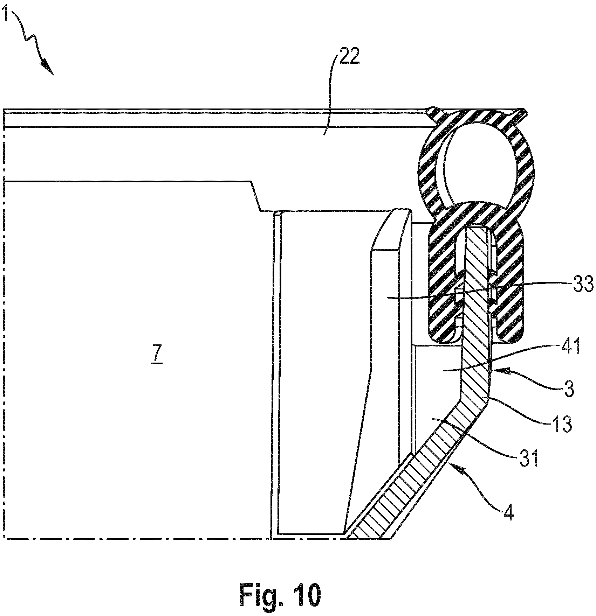

Fig. 1 bis Fig. 14 zeigen eine Absaugvorrichtung 1, die zum Zusammenwirken mit einer nicht näher ersichtlichen Kernbohreinrichtung vorgesehen ist. Die Absaugvorrichtung 1 weist ein mit einem Deckel 2 und einer Wandung 3 ausgeführtes Gehäuse 4 auf, das hier insgesamt eine V-Form aufweist. Die Absaugvorrichtung 1 ist vorliegend im Wesentlichen symmetrisch zu einer Längsmittelebene 6 ausgeführt, wobei in einem mittigen Bereich ein Absaugstutzen 5 mit dem Deckel 2 verbunden ist. Der Anschlussstutzen ist zur Verbindung der Absaugvorrichtung 1 mit einer Saugeinrichtung bzw. einem Entstauber vorgesehen, mittels welchem in einem beispielsweise in Fig. 4 ersichtlichen Hohlraum 7 der Absaugvorrichtung 1 ein Unterdruck erzeugbar ist.

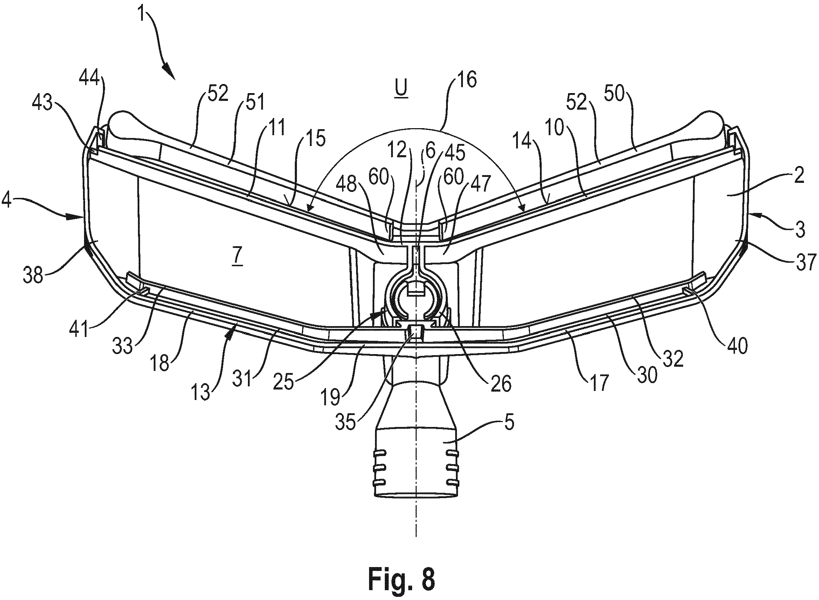

Wie beispielsweise in Fig. 8 näher ersichtlich ist, ist die Wandung 3 vorliegend im Wesentlichen senkrecht zu dem Deckel 2 angeordnet und umlaufend mit dem Deckel 2 verbunden. Die Wandung 3 weist dabei einen ersten Wandungsbereich 10, einen zweiten Wandungsbereich 11, einen dritten Wandungsbereich 12 und einen vierten Wandungsbereich 13 auf. Der erste Wandungsbereich 10, der zweite Wandungsbereich 11 und der dritte Wandungsbereich 12 sind vorliegend im Wesentlichen plan ausgeführt, wobei der erste Wandbereich 10 mit dem dritten Wandbereich 12 und der zweite Wandbereich 11 in einem dem Anbindungsbereich des ersten Wandbereichs 10 an den dritten Wandbereich 12 abgewandten Randbereich des dritten Wandbereichs 12 mit dem dritten Wandbereich 12 verbunden ist. Eine dem Hohlraum 7 abgewandte Oberfläche 14 des ersten Wandbereichs 10 schließt mit einer dem Hohlraum 7 abgewandten Oberfläche 15 des zweiten Wandbereichs 11 einen stumpfen Winkel 16 ein, der vorliegend etwa 140° beträgt.

Der vierte Wandbereich 13 ist U-förmig bzw. sichelförmig ausgeführt, wobei der vierte Wandbereich 13 jeweils im Wesentlichen parallel zu dem ersten Wandbereich 10, dem zweiten Wandbereich 11 und dem dritten Wandbereich 12 verlaufende, im Wesentlichen plan ausgeführte Abschnitte 17, 18, 19 aufweist. Der vierte Wandbereich 13 ist in einem Randbereich mit einem dem dritten Wandbereich 12 abweisenden Randbereich des ersten Wandbereichs 10 und in einem weiteren Randbereich mit einem dem dritten Wandbereich 12 abweisenden Randbereich des zweiten Wandbereichs 11 verbunden.

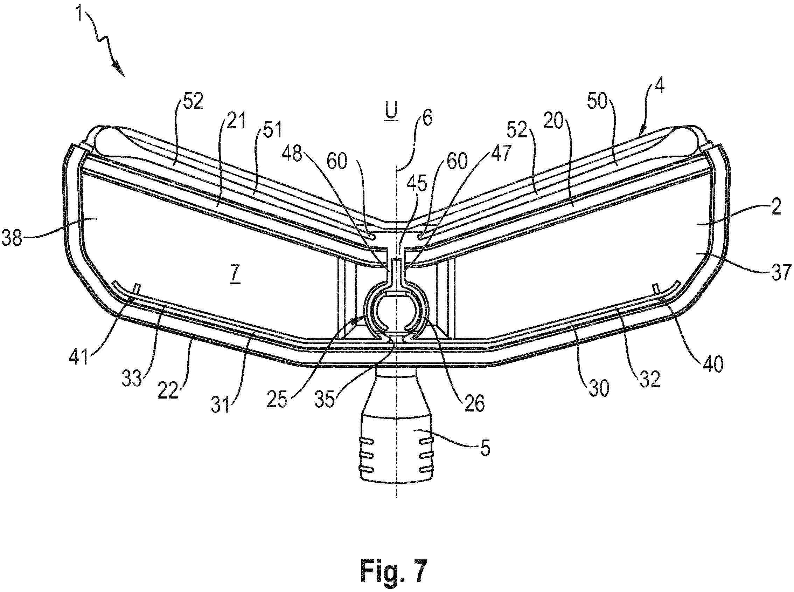

In einem dem Deckel 2 abweisenden Randbereich der Wandung 3 sind, wie beispielsweise in Fig. 7 ersichtlich ist, vorliegend drei Dichtelemente 20, 21, 22 angeordnet, die nahezu vollständig umlaufend mit der Wandung 3 verbunden sind und auf dem jeweiligen Wandungsbereich 10, 11, 12 bzw. 13 der Wandung 3 aufsteckbar sind. Das erste Dichtelement 20 ist dabei mit dem ersten Wandungsbereich 10 verbunden und weist im Wesentlichen eine mit dem ersten Wandungsbereich 10 vergleichbare Längserstreckung auf. Das zweite Dichtelement 21 ist mit dem zweiten Wandungsbereich 11 verbunden und weist im Wesentlichen eine mit dem zweiten Wandungsbereich 11 vergleichbare Längserstreckung auf. Das dritte Dichtelement 22 ist dagegen mit dem vierten Wandungsbereich 13 verbunden und weist im Wesentlichen eine mit dem dritten Wandungsbereich 13 vergleichbare Längserstreckung auf.

In dem Hohlraum 7 ist weiterhin ein hier mit einer bereichsweise zylinderförmig ausgeführten Wand 26 ausgebildeter Absaugbereich 25 angeordnet, wobei die Wand 26 mit dem Deckel 2 verbunden ist. Die Wand 26 weist eine Höhenerstreckung derart auf, dass die Wand 26 in einem Betriebszustand an einem Untergrund gehaltenen Absaugvorrichtung 1 vorzugsweise direkt in Kontakt mit dem Untergrund steht. Somit liegen insbesondere in dem Betriebszustand der Absaugvorrichtung 1 sämtliche Dichtelemente 20, 21, 22 und die Wand 26 des Absaugbereichs 25 auf einer dem Untergrund zugewandten Seite im Wesentlichen in einer Ebene. Im Betriebszustand der Absaugvorrichtung 1 ist die Absaugvorrichtung 1 durch einen von der Saugeinrichtung in dem Hohlraum 7 erzeugten Unterdruck vorzugsweise ohne weitere Halteeinrichtung an dem Untergrund, beispielsweise einem Boden oder einer Wand, gehalten.

Es sind vorliegend weiterhin zwei Absaugkanäle 30, 31 vorgesehen, die durch den vierten Wandungsbereich 13 und einen im Wesentlichen parallel zu dem vierten Wandungsbereich 13 verlaufenden fünften Wandungsbereich 32 bzw. einen im Wesentlichen parallel zu dem vierten Wandungsbereich 13 verlaufenden sechsten Wandungsbereich 33 gebildet sind. Ein Abstand zwischen dem vierten Wandungsbereich 13 und dem fünften Wandungsbereich 32 und ein Abstand zwischen dem vierten Wandungsbereich 13 und dem sechsten Wandungsbereich 33 ist insbesondere über nahezu die gesamte Erstreckung der Absaugkanäle 30, 31 konstant und beträgt vorliegend etwa 6 mm. Der fünfte Wandungsbereich 32 und der sechste Wandungsbereich 33 sind dabei plattenförmig ausgeführt und jeweils mit dem Deckel 2 verbunden. Diese Wandungsbereiche 32 und 33 weisen eine Höhenerstreckung derart auf, dass sie im Betriebszustand der Absaugvorrichtung 1 in Kontakt mit dem Dichtelement 22 kommen, so dass der jeweilige Absaugkanal 30 bzw. 31 auf einer dem Deckel 2 abgewandten Seite von dem Dichtelement 22 abgedichtet ist.

Wie beispielsweise in Fig. 8 ersichtlich ist, sind der fünfte Wandungsbereich 32 und der sechste Wandungsbereich 33 jeweils mit der Wand 26 des Absaugbereichs 25 verbunden, die im Bereich der Längsmittelebene 6 eine Aussparung 35 aufweist, so dass der jeweilige Absaugkanal 30, 31 direkt in Kontakt mit dem Absaugbereich 25 steht. Der fünfte Wandungsbereich 32 erstreckt sich ausgehend von dem Absaugbereich 25 im Wesentlichen parallel zu dem vierten Wandungsbereich 13 bis in einen der Längsmittelebene 6 abgewandten ersten Randbereich 37 des Gehäuses 4. Ebenso erstreckt sich der sechste Wandungsbereich 33 ausgehend von dem Absaugbereich 25 im Wesentlichen parallel zu dem vierten Wandungsbereich 13 bis in einen dem ersten Randbereich 37 bezüglich der Längsmitteleben 6 gegenüberliegenden zweiten Randbereich 38 des Gehäuses.

Sowohl in dem ersten Absaugkanal 30 als auch in dem zweiten Absaugkanal 31 ist in einem dem ersten Randbereich 37 bzw. dem zweiten Randbereich 38 zugewandten Bereich des jeweiligen Absaugkanals 30 bzw. 31 vorliegend jeweils Element 40 bzw. 41 angeordnet, das den Strömungsquerschnitt des jeweiligen Absaugkanals 30 bzw. 31 im Bereich des Elements 40 bzw. 41 verjüngt bzw. verkleinert. Im Bereich des Elements 40 bzw. 41 weist der Absaugkanal 30 bzw. 31 eine Breite von vorzugsweise 2 mm bis 3 mm, insbesondere etwa 2,5 mm und eine Höhe von vorzugsweise 10 mm bis 20 mm, insbesondere etwa 15 mm auf, so dass der Absaugkanal 30 bzw. 31 in diesem Bereich einen Querschnitt von 20 mm² bis 60 mm², insbesondere von etwa 37,5 mm² aufweist. Ein durchströmbarer Querschnitt des Absaugkanals 30 bzw. 31 wird im Bereich des jeweiligen Elements 40 bzw. 41 in Betriebsstellung der Absaugvorrichtung 1 seitlich von dem fünften Wandungsbereich 32 bzw. dem sechsten Wandungsbereich 33 und dem dritten Dichtelement 22 begrenzt. Anderseits wird der durchströmbare Querschnitt des Absaugkanals 30 bzw. 31 senkrecht hierzu in Hochrichtung einerseits von dem jeweiligen Element 40 bzw. 41 und andererseits von dem den Absaugkanal 30 bzw. 31 in der Betriebsstellung der Absaugvorrichtung 1 auf einer gegenüberliegenden Seite abdichtenden dritten Dichtelement 3 begrenzt. Durch eine entsprechende Querschnittsgestaltung des Absaugkanals 30 bzw. 31 kann auf einfache Weise sichergestellt werden, dass beispielsweise in dem Hohlraum 7 befindliches Bohrwasser insbesondere vollständig über den Absaugkanal 30 bzw. 31 und den Absaugbereich 25 aus dem Hohlraum 7 abgeführt wird.

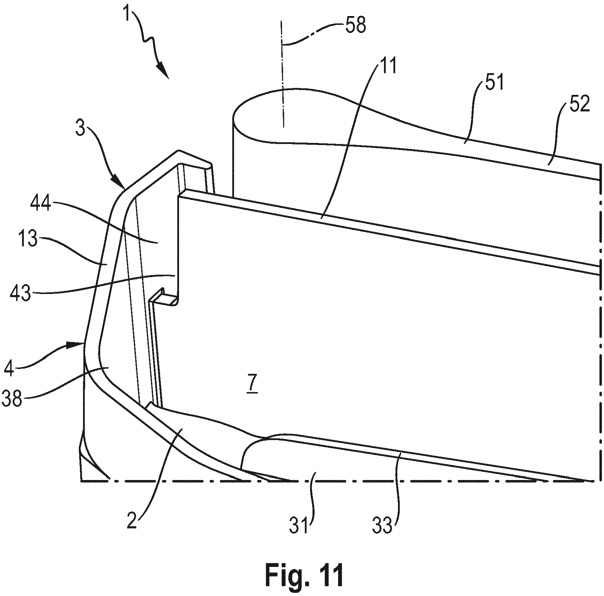

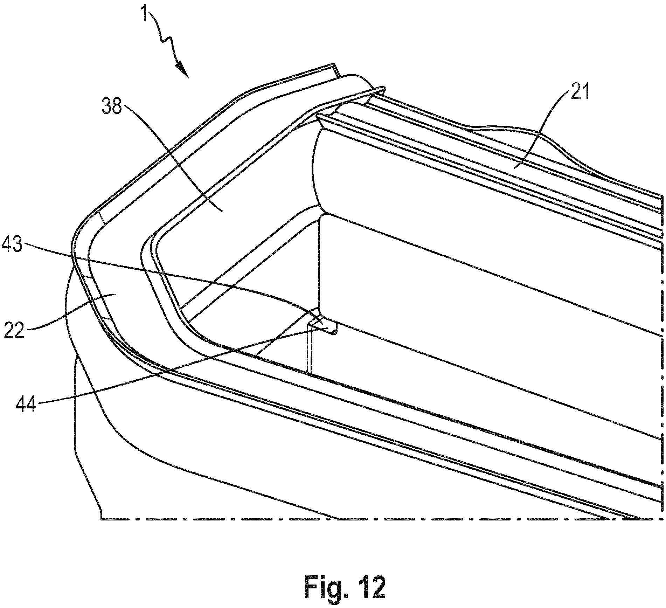

Wie in Fig. 11 und Fig. 12 näher ersichtlich ist, ist in einem an den ersten Wandungsbereich 10 grenzenden Stoßbereich des vierten Wandungsbereichs 13 durch eine Aussparung 43 in dem ersten Wandungsbereich 10 eine Einlassöffnung 44 gebildet, über die dem Hohlraum 7 in der Betriebsstellung der Absaugvorrichtung 1 Bohrwasser von der Umgebung U zuführbar ist. In Fig. 12 ist erkennbar, dass die Einlassöffnung 44 im Wesentlichen unterhalb des ersten Dichtelements 20 angeordnet ist. Vergleichbar zu der Einlassöffnung 44 ist in dem gegenüberliegenden Randbereich des Gehäuses 4 eine durch eine Aussparung in dem zweiten Wandungsbereich 11 gebildete Einlassöffnung vorgesehen.

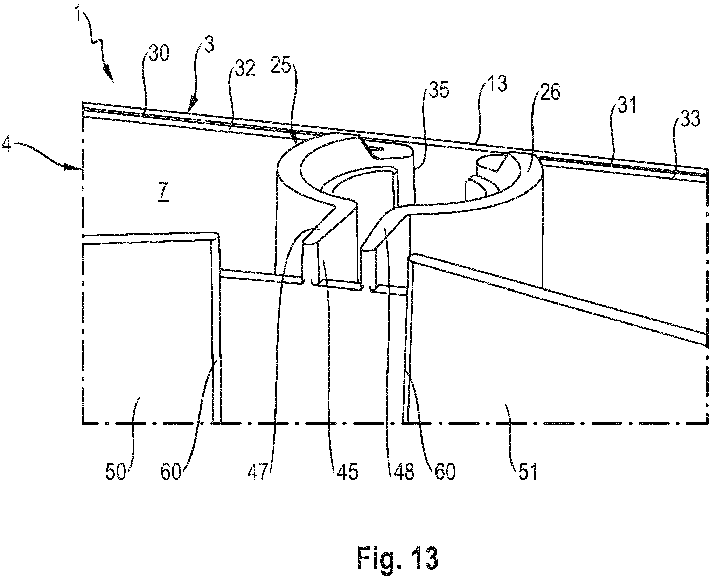

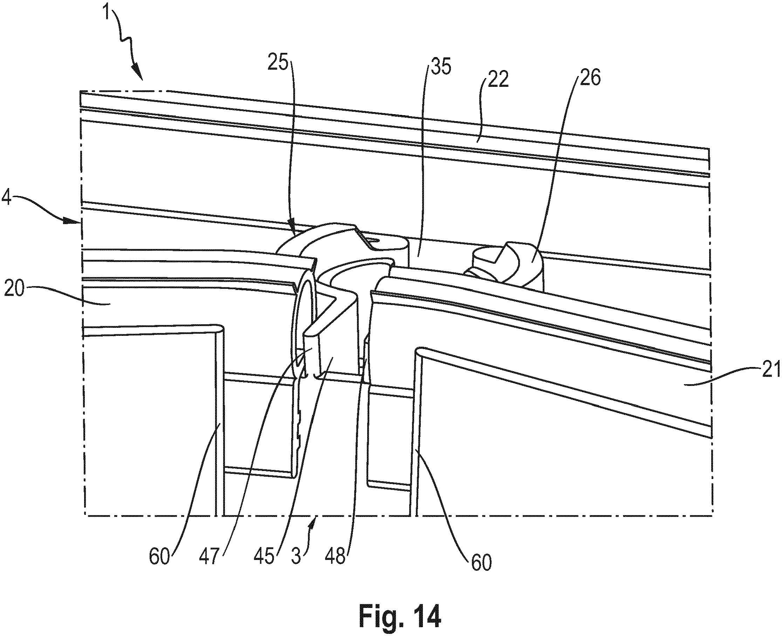

In Fig. 13 und Fig. 14 ist eine weitere Einlassöffnung 45 gezeigt, die durch zwei im Wesentlichen parallele Wandbereich 47 und 48 der Wand 26 des Absaugbereichs 25 und einen Abstand zwischen dem ersten Dichtelement 20 und dem zweiten Dichtelement 21 gebildet ist. Durch die weitere Einlassöffnung 45 ist beispielsweise von der Umgebung U zugeführtes Bohrwasser direkt in den Absaugbereich 25 führbar.

Sowohl die Einlassöffnungen 44 als auch die weitere Einlassöffnung 45 grenzen in der Betriebsstellung der Absaugvorrichtung 1 insbesondere direkt an einen Untergrund, so dass Bohrwasser auf einfache Weise durch die Einlassöffnungen 44, 45 in den Hohlraum 7 einleitbar ist.

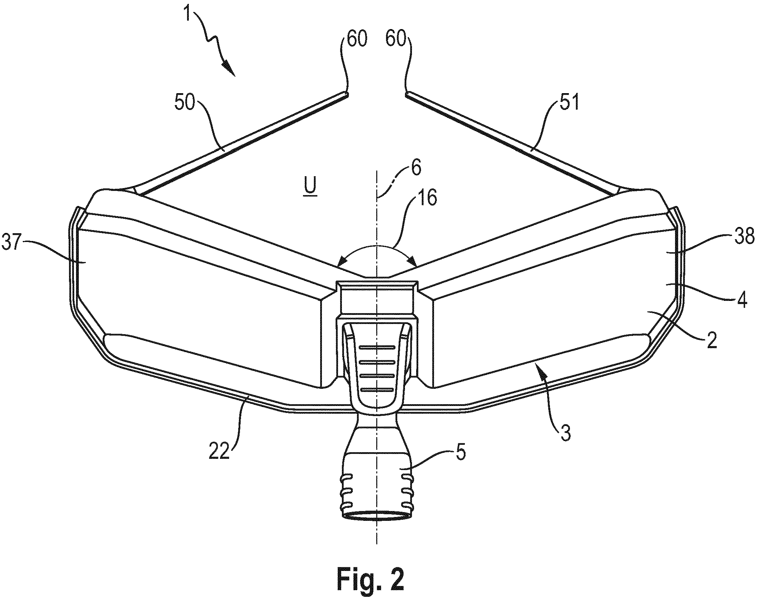

Wie beispielsweise in Fig. 2 bis Fig. 6 näher gezeigt, weist die Absaugvorrichtung 1 vorliegend zwei Dichteinrichtungen 50, 51 auf, die jeweils um eine Drehachse 57 bzw. 58 verschwenkbar an dem Gehäuse 4 gelagert sind. Die beispielsweise als Dichtstreifen ausgeführten Dichteinrichtungen 50, 51 sind vorliegend plattenförmig und aus einem elastischen und flexiblen Material, beispielsweise Gummi, ausgeführt und jeweils auf einer dem Hohlraum 7 abgewandten Seite des ersten Wandungsbereichs 10 bzw. des zweiten Wandungsbereichs 11 gelagert. Hierzu ist an dem Gehäuse 4 jeweils eine zylinderförmiger Aufnahme 54 bzw. 55 in Form eines Haltedoms angeordnet, auf die die jeweilige Dichteinrichtung 50, 51 mit einer korrespondierenden zylinderförmigen Ausnehmung 56 bzw. 57 aufgesteckt ist. Ein Innendurchmesser der Ausnehmung 56 bzw. 57 ist dabei vorzugsweise kleiner als ein Außendurchmesser der Aufnahme 54 bzw. 55, so dass die Dichteinrichtung 50 bzw. 51 sicher in der jeweils aktuellen Stellung gehalten ist.

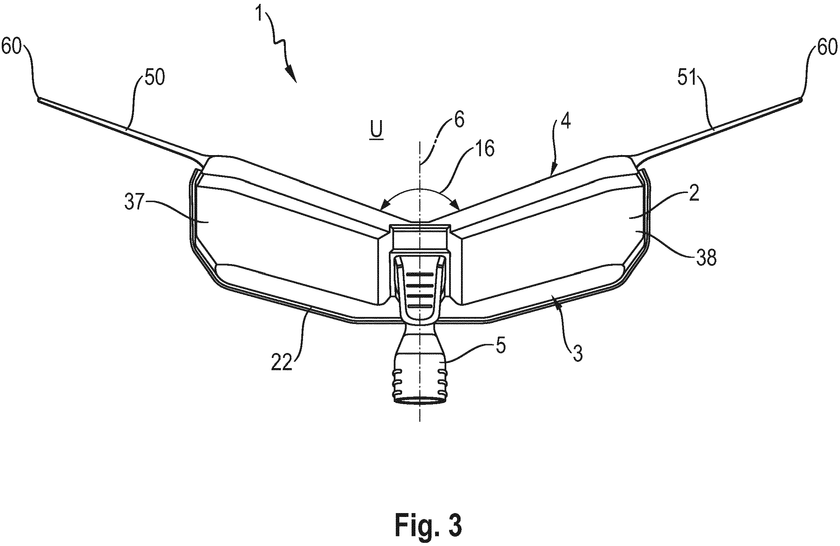

Die jeweilige Dichteinrichtung 50 bzw. 51 ist zwischen der beispielsweise in Fig. 4 gezeigten Nichtgebrauchsstellung, in der die Dichteinrichtung 50 bzw. 51 im Wesentlichen parallel zu dem Wandungsbereich 10 bzw. 11 angeordnet ist, und verschiedenen Gebrauchsstellungen gemäß Fig. 2 und Fig. 3 verstellbar. Die Dichteinrichtungen 50 bzw. 51 sind dabei unabhängig voneinander vorliegend gegenüber der Nichtgebrauchsstellung um einen Winkel von etwa 180° um die Drehachse 57 bzw. 58 verschwenkbar. In der Nichtgebrauchsstellung nimmt die Absaugvorrichtung 1 einen vorteilhaft geringen Bauraum ein.

Die Dichteinrichtungen 50 bzw. 51 weisen auf einer in der Betriebsstellung der Absaugvorrichtung 1 einem Untergrund zugewandten Seite 52 einen schrägen Verlauf ab, wobei ein der jeweiligen Aufnahme 53 bzw. 54 abgewandter Randbereich 60 in einer Nichtgebrauchsstellung der Absaugvorrichtung 1 eine größere Erstreckung in Richtung einer in der Betriebsstellung mit einem Untergrund zusammenwirkenden Richtung aufweist als ein der Aufnahme 53 bzw. 54 zugewandter Bereich. Hierdurch wird in der Betriebsstellung der Absaugvorrichtung durch eine große erzielbare Flächenpressung eine dichtende Anlage der Dichteinrichtung 50 bzw. 51 an dem Untergrund sichergestellt. Weiterhin sind durch eine derartige Ausführung der Dichteinrichtungen 50 bzw. 51 Unebenheiten eines Untergrunds und Toleranzschwankungen ausgleichbar.

Die Absaugvorrichtung 1 ist zum Zusammenwirken mit einer Kernbohreinrichtung, beispielsweise einer Diamantbohreinrichtung, vorgesehen, wobei die Absaugvorrichtung 1 als eine Haltehilfe für die Absaugvorrichtung 1 ausgeführt sein kann. Die Absaugvorrichtung 1 ist durch die V-förmige Ausführung des ersten Wandungsbereichs 10 gegenüber dem zweiten Wandungsbereich 11 vorzugsweise unterhalb einer Bohrkrone der Kernbohreinrichtung insbesondere direkt angrenzend an der Bohrkrone anordenbar, so dass bei einer Kernbohrung abgeschleudertes Bohrwasser insbesondere vollständig von der Absaugvorrichtung 1 aufnehmbar ist. Durch eine entsprechende Einstellung der Dichteinrichtungen 50 bzw. 51 ist auf einfache Weise erzielbar, dass ein besonders großer Anteil des von der Bohreinrichtung abgeschleuterten Bohrwassers der Absaugvorrichtung 1 zugeführt wird. Eine wirksame Breite der Absaugvorrichtung 1 ist durch die Dichteinrichtungen 50 bzw. 51 in der Gebrauchsstellung auf einfache Weise vergrößerbar. Weiterhin kann mittels der Dichteinrichtungen 50 bzw..51 in der Gebrauchsstellung vorzugsweise gegenüber einer zu der zu bearbeitenden Wand senkrecht angeordneten Seitenwand abgedichtet werden.

Wenn die Absaugvorrichtung 1 mittels des Absaugstutzens 5 an eine Saugeinrichtung bzw. einen Entstauber angeschlossen ist, entsteht bei einer Anordnung der Absaugvorrichtung 1 an einem Untergrund, insbesondere einer Wand, ein Unterdruck in dem Hohlraum 7, durch den die Absaugvorrichtung 1 fest und sicher an dem Untergrund gehalten ist. Durch den Unterdruck in dem Hohlraum 7 und die Schwerkraft wird das Bohrwasser durch die Einlassöffnungen 44 bzw. die weitere Einlassöffnung 45 in den Hohlraum 7 gesaugt und über den Absaugbereich 25 und den Absaugstutzen 5 aus dem Hohlraum 7 abgeführt.

Durch die flache V-Form des Gehäuses 4 der Absaugvorrichtung 1 ist ein Winkelbereich der Absaugvorrichtung 1 bei einer Anordnung der Absaugvorrichtung 1 an einer Wand relativ klein, in dem der dritte Wandungsbereich tiefer als der erste Wandungsbereich 10 und der zweite Wandungsbereich 11 angeordnet ist. In diesem Fall wird das Bohrwasser durch die weitere Einlassöffnung 44 direkt dem Absaugbereich 25 zugeführt bzw. durch die im Wesentlichen parallel zu dem ersten Wandungsbereich 10 und dem zweiten Wandungsbereich 11 ausgeführten Abschnitte 17 und 18 des vierten Wandungsbereichs 13 durch die Schwerkraft in Richtung des Absaugbereichs 25 geführt.

In der Betriebsstellung der Absaugvorrichtung 1 kann es vorgesehen sein, dass die Absaugvorrichtung derart schief angeordnet ist, dass der erste Wandungsbereich 10 oder der zweite Wandungsbereich 11 mit einem dem Randbereich 37 bzw. 38 des Gehäuses 4 zugewandten Bereich gegenüber einem der Längsmittelebene 6 zugewandten Bereich niedriger angeordnet ist. In diesem Fall würde sich Bohrwasser allein unter Einwirkung der Schwerkraft in einem seitlichen Randbereich des Hohlraums 7 sammeln. Durch das Vorsehen der Absaugkanäle 30, 31 ist auch für diesen Fall sichergestellt, dass Bohrwasser insbesondere nahezu vollständig aus dem Hohlraum 7 abgeführt wird. Hierdurch ist eine Verschmutzung der Wand nach einer Abnahme der Absaugvorrichtung 1 von dieser verhinderbar.

### Bezugszeichenliste

- 1: Absaugvorrichtung
- 2: Deckel
- 3: Wandung
- 4: Gehäuse
- 5: Absaugstutzen
- 6: Längsmittelebene
- 7: Hohlraum
- 10: erster Wandungsbereich
- 11: zweiter Wandungsbereich
- 12: dritter Wandungsbereich
- 13: vierter Wandungsbereich
- 14: Oberfläche des ersten Wandungsbereichs
- 15: Oberfläche des zweiten Wandungsbereichs
- 16: Winkel
- 17: Abschnitt des vierten Wandungsbereichs
- 18: Abschnitt des vierten Wandungsbereichs
- 19: Abschnitt des vierten Wandungsbereichs
- 20: erstes Dichtelement
- 21: zweites Dichtelement
- 22: drittes Dichtelement
- 25: Absaugbereich
- 26: Wand
- 30: erster Absaugkanal
- 31: zweiter Absaugkanal
- 32: fünfter Wandungsbereich
- 33: sechster Wandungsbereich
- 35: Aussparung
- 37: erster Randbereich des Gehäuses
- 38: zweiter Randbereich des Gehäuses
- 40: Element
- 41: Element
- 43: Aussparung
- 44: Einlassöffnung
- 45: weitere Einlassöffnung
- 47: Wandbereich
- 48: Wandbereich
- 50: erste Dichteinrichtung
- 51: zweite Dichteinrichtung
- 52: Seite
- 53: Aufnahme
- 54: Aufnahme
- 55: Ausnehmung
- 56: Ausnehmung
- 57: Drehachse
- 58: Drehachse
- 60: Randbereich
- U: Umgebung

## Patentansprüche

1. Absaugvorrichtung (1) für eine Kernbohreinrichtung, mit einem wenigstens einen Hohlraum (7) aufweisenden Gehäuse (4), das einen Deckel (2) und eine umlaufend mit dem Deckel (2) verbundene Wandung (3) aufweist, wobei ein mit dem Gehäuse (4) verbundener Absaugstutzen (5) vorgesehen ist, der zur Anbindung der Absaugvorrichtung (1) an eine Saugeinrichtung ausgeführt ist,
**dadurch gekennzeichnet, dass** die Wandung (3) wenigstens eine Einlassöffnung (44, 45) aufweist, über die der Hohlraum (7) mit der Umgebung (U) verbunden ist, wobei auf einer dem Hohlraum (7) abgewandten Seite der Wandung (3) eine Dichteinrichtung (50, 51) mit dem Gehäuse (4) verbunden ist, die zwischen einer im Wesentlichen an der Wandung (3) des Gehäuses (4) anliegenden Nichtgebrauchsstellung und einer gegenüber der Nichtgebrauchsstellung um eine Drehachse (57, 58) verschwenkten Gebrauchsstellung verlagerbar ist.

2. Absaugvorrichtung nach Anspruch 1,
**dadurch gekennzeichnet, dass** die Dichteinrichtung (50, 51) zwischen der Nichtgebrauchsstellung und der Gebrauchsstellung um einen Winkel von etwa 180° verschwenkbar ist.

3. Absaugvorrichtung nach einem der Ansprüche 1 oder 2,
**dadurch gekennzeichnet, dass** die Dichteinrichtung (50, 51) mit einem flexiblen Material ausgeführt ist.

4. Absaugvorrichtung nach einem der Ansprüche 1 bis 3,
**dadurch gekennzeichnet, dass** die Dichteinrichtung (50, 51) fest oder lösbar mit dem Gehäuse (4) verbunden ist.

5. Absaugvorrichtung nach einem der Ansprüche 1 bis 4,
**dadurch gekennzeichnet, dass** das Gehäuse (4) eine zylinderförmige Aufnahme (53, 54) und die Dichteinrichtung (50, 51) eine hierzu korrespondierend ausgeführte zylinderförmige Ausnehmung (55, 56) aufweist, wobei ein Innendurchmesser der Ausnehmung (55, 56) vorzugsweise kleiner als ein Außendurchmesser der Aufnahme (53, 54) ist.

6. Absaugvorrichtung nach einem der Ansprüche 1 bis 5,
**dadurch gekennzeichnet, dass** eine Seite (52) der Dichteinrichtung (50, 51), die in der Betriebsstellung der Absaugvorrichtung (1) einer Wand oder einem Boden zugewandt ist, ausgehend von der Aufnahme (53, 54) einen schrägen Verlauf aufweist.

7. Absaugvorrichtung nach einem der Ansprüche 1 bis 6,
**dadurch gekennzeichnet, dass** die Dichteinrichtung (50, 51) in einem bezüglich einer Quererstreckung der Absaugvorrichtung (1) seitlichen Randbereich (37, 38) der Absaugvorrichtung (1) an das Gehäuse (4) angebunden ist.

8. Absaugvorrichtung nach einem der Ansprüche 1 bis 7,
**dadurch gekennzeichnet, dass** zwei Dichteinrichtungen (50, 51) vorgesehen sind, die in einander abgewandten seitlichen Randbereichen (37, 38) der Absaugvorrichtung (1) an das Gehäuse (4) angebunden sind.

9. Absaugvorrichtung nach einem der Ansprüche 1 bis 8,
**dadurch gekennzeichnet, dass** die Wandung (3) einen ersten im Wesentlichen plan ausgeführten Wandungsbereich (10) und einen zweiten im Wesentlichen plan ausgeführten Wandungsbereich (11) aufweist, und wobei eine dem Hohlraum (7) abgewandte Oberfläche (14) des ersten Wandungsbereichs (10) mit einer dem Hohlraum (7) abgewandten Oberfläche (15) des zweiten Wandungsbereichs (11) einen stumpfen Winkel (16) einschließt.

10. Absaugvorrichtung nach Anspruch 9,
**dadurch gekennzeichnet, dass** der erste Wandungsbereich (10) und der zweite Wandungsbereich (11) mittels eines vorzugsweise plan ausgeführten dritten Wandungsbereich (12) miteinander verbunden sind.

11. Absaugvorrichtung nach einem der Ansprüche 9 oder 10,
**dadurch gekennzeichnet, dass** die Wandung (3) einen vierten, insbesondere sichelförmig oder U-förmig ausgeführten Wandungsbereich (13) aufweist, der mit dem ersten Wandungsbereich (10) und mit dem zweiten Wandungsbereich (11) verbunden ist.

12. Absaugvorrichtung nach einem der Ansprüche 1 bis 11,
**dadurch gekennzeichnet, dass** in dem Hohlraum (7) ein insbesondere zylinderförmig ausgeführter Absaugbereich (25) angeordnet ist, durch den der Absaugstutzten (5) mit dem Hohlraum (7) in Verbindung steht.

13. Absaugvorrichtung nach einem der Ansprüche 9 bis 12,
**dadurch gekennzeichnet, dass** wenigstens ein Absaugkanal (30, 31) vorgesehen ist, der durch den vierten Wandungsbereich (13) und eine im Wesentlichen parallel zu dem vierten Wandungsbereich (13) angeordneten fünften Wandungsbereich (32, 33) gebildet ist.

14. Absaugvorrichtung nach einem der Ansprüche 1 bis 13,
**dadurch gekennzeichnet, dass** das Gehäuse (4) drei Einlassöffnungen (44, 45) aufweist, wobei eine Einlassöffnung (44) in einem Verbindungsbereich des ersten Wandungsbereichs (10) mit dem vierten Wandungsbereich (13), eine Einlassöffnung in einem Verbindungsbereich des zweiten Wandungsbereichs (11) mit dem vierten Wandungsbereich (13) und eine Einlassöffnung (45) in der Wandung (3) im Bereich des Absaugbereichs (25) angeordnet ist.

15. Absaugvorrichtung nach einem der Ansprüche 1 bis 14,
**dadurch gekennzeichnet, dass** ein Dichtelement oder mehrere Dichtelemente (20, 21, 22) vorgesehen sind, das oder die auf einer dem Deckel (2) abgewandten Seite insbesondere umlaufend mit der Wandung (3) verbunden ist bzw. sind.
